# EUROPEAN PATENT APPLICATION

(11) **EP 1 582 413 A1**
(43) Date of publication of application: **05.10.2005**
(21) Application number: 04007613.5
(22) Date of filing: 30.03.2004
(51) Int. Cl.: B60R 19/12

(54) **A bumper device for a vehicle**

(71) Applicant: Ford Global Technologies, Inc., Michigan 48126 (US)
(72) Inventor: Ericsson, Mattias, 432 54 Varberg (SE); Blum, Peter, 433 31 Partille (SE); Junback, Göran, 412 61 Göteborg (SE); Lund, Kristoffer, 433 41 Partille (SE)
(74) Representative: Holm, Maria Linnéa

(57) **Abstract**

A bumper device (2) for use with a vehicle (1), which bumper device provides a contact zone (6) between the bumper device (2) and a foreign body (7) during impact between a vehicle (1) and such a foreign body (7). The bumper device (2) comprises a housing (3), and the housing (3) accommodates an elongated free body (4) arranged to build up a major part of the force arising in the contact zone (6) during impact by means of the mass-moment of inertia of the bumper device (2).

## Description

### FIELD OF THE INVENTION

The present invention relates to a bumper device for use with a vehicle according to the preamble of claim 1, and a vehicle according to the preamble of claim 9, and to a bumper assembly according to the preamble of claim 21.

Such a bumper device may be used for several vehicle applications where a bumper device is desired, but hereinafter the particular, but not in any way limiting for the invention, fields of application constituting a means for achieving a pedestrian protection, and in particular for reducing the bending angle of the leg in an accident between a vehicle and a pedestrian, will be described.

### BACKGROUND OF THE INVENTION

Motor vehicle manufacturers are constantly striving to provide vehicles which, in the event of a collision, reduce the risk of injury to persons involved in the collision. These persons may be occupants of the vehicle or a pedestrian which is struck by the vehicle. To this end, vehicles are nowadays designed with so-called deformation zones which deform in a controlled manner to thereby absorb energy which arises during impact between the vehicle and an object.

However, today there is a conflict between low speed crash robustness of a vehicle and good pedestrian protection in case of an impact between the vehicle and a pedestrian.

To avoid or minimize injuries of a pedestrian in case of an accident where a vehicle hits a pedestrian, besides a conventional bumper device, a certain type of spoiler arranged below the bumper device can be used to reduce the so called bending angle of the leg during impact. Usually, a spoiler is provided for other reasons such as aerodynamics, appearance etc., and such a conventional spoiler has very little influence on the impact characteristics since the spoiler consists of a housing or a thin shell structure made by plastic or similar having a low strength. However, the spoiler may be provided with a bumper beam arranged inside the spoiler close to the front surface of the spoiler, which bumper beam is supported by the frame of the vehicle by means of arms extending from the bumper beam backwards to the rigid frame.

By such a spoiler it is possible to build up a force between the leg of a pedestrian and the spoiler in another contact zone located at a lower level than the contact zone between the conventional bumper device and the leg. Such an additional contact zone, preferably located below knee-height, which occurs during a time period of the impact when also the contact zone between the leg and the conventional bumper device is established, is very useful since the bending angle of the leg will be reduced and thus, the knee of the pedestrian leg will be less injured.

An example of a pedestrian protection according to prior art is described in US 2003/0184122 A1. The protection assembly includes a bumper support beam rigidly secured to the frame of the vehicle.

### SUMMARY OF THE INVENTION

However, as indicated above such an additional bumper beam arranged in the spoiler and rigidly secured to the frame of the vehicle has disadvantages. In a low speed crash the spoiler will be subjected to extensive damages due to the supporting arms connecting the bumper beam and the frame. Furthermore, there is an increased risk that more components will be affected in the crash, and that the overall crash characteristics of the front of the vehicle will be influenced in a negative way.

Accordingly, there is an object of the present invention to provide a bumper device, particularly for spoilers, which device fulfils the requisite pedestrian protection and at the same time has an improved robustness in low speed crashes.

This is achieved by a device according to claim 1.

By the provision of a housing that accommodates an elongated free body arranged to build up a major part of the force arising in the contact zone during impact by means of the mass-moment of inertia of the bumper device, the bumper device will quickly build up a force between the device and a leg during impact, and then the force will be reduced sufficiently fast not to increase the overall deceleration of the leg in an undesired way. This means that a relatively short force pulse is created by the bumper device according to the invention. The pulse can be adapted so that the desired deceleration of the leg is obtained. In addition to the effect of the bumper device, the overall deceleration of the leg is a function of the characteristics of any other bumper device and of the bonnet leading edge of the front of the vehicle. By using the bumper device according to the invention to provide such a force pulse in the initial stage of the impact, all in all, a deceleration of the leg corresponding to a substantially square-shaped pulse when illustrated in a deceleration-time chart may be obtained.

The pedestrian protection can be obtained without compromising the robust demands. There is no need of a support structure for connecting a bumper beam and the frame of the vehicle and thus, a vehicle provided with the present bumper device arranged as a spoiler, will pass low speed crashes between the spoiler and a foreign body with less damaged components and with only minor damages of the vehicle.

Furthermore, the use of a bumper device according to the invention implies several advantages related to manufacturing of a vehicle compared to the use a conventional supported beam structure; such as lower component cost, easier assembling, no tolerance demands of the component related to the vehicle body, less weight, less packaging problems, no or less influence on the high speed crash performance of the vehicle.

The application also relates to a vehicle according to claim 9 having a bumper device according to the invention, and a bumper device assembly according to claim 21 having a bumper device according top the invention.

Furthermore, the invention relates to use of a free body for building up a major part of the force arising in the contact zone during impact between a bumper device of a vehicle and a foreign body by means of the mass-moment of inertia of the bumper device or the free body.

Other advantageous features and functions of different embodiments of the device according to the invention appear from the following detailed description and dependent claims.

### BRIEF DESCRIPTION OF THE DRAWINGS

With reference to appended drawings below follows a closer description of embodiments of the invention cited as examples.

### In the drawings:

Fig. 1 is a schematic side elevation view illustrating a car having a bumper device according to the invention arranged as a spoiler, and a simulated leg,
Fig. 2a is a force versus time-chart illustrating the force in different contact zones during impact between the car and the simulated leg in Fig. 1,
Fig. 2b is a deceleration versus time-chart corresponding to the force versus time-chart in Fig. 2a,
Fig. 3 is a perspective view from the inside of the bumper device according to the invention shown in Fig. 1 showing a bumper beam arranged in a compartment of a housing, and
Fig. 4 is a cross section view of the bumper beam and the housing in Fig. 4.

### DETAILED DESCRIPTION OF PREFERRED EMBODIMENTS OF THE INVENTION

In this description and in appended claims the expression "free body" encompasses any physical object with a mass, which object is not coupled to the frame of the vehicle, the engine bearer or to any other firm part of the vehicle to obtain support during an impact. This means that there is not any directly or indirectly support of significance from any other component of the vehicle to the free body during impact. Thus, in case of an impact between a vehicle provided with the bumper device according to the invention and a foreign body the free body will not be prevented from moving backwards relative to the vehicle by a counter force from such a firm component. In other words, the energy of the free body during impact is preferably relatively large compared to the strength of the components in the vicinity of the free body and/or there is a space between the free body and the components closest to the free body allowing movement of the free body. Thus, the force in the contact zone during impact does not arise primarily owing to a counter force acting on the free body, but the force in the contact zone is primarily built up by the resistance against movement of the free body due to the mass-moment of inertia of the free body or of the bumper device in its entirety.

However, the free body has to be coupled to the vehicle in some way, and one way to achieve such a coupling is to suspend the free body from flexible wires. This means that the free body can almost without resistance pivot about the attachment points of the wires relative to the vehicle in case of an impact. For other reasons, in practice the free body, for example a beam or similar, is suitably built-in in the front of the vehicle and coupled thereto in a way so that the free body does not move during the driving of the vehicle. To fulfil also this demand, the free body may be arranged together with a housing. The housing can accommodates the free body in a compartment which implies that the free body is held in the desired position during normal use of the vehicle, and at the same time the free body is free to move in case of an impact. The housing can be designed, for example by a thin shell structure, with such a low strength that in case of an impact the counter force from the housing acting on the free body during impact, due to the coupling of the housing to the vehicle body, is considered to be negligible.

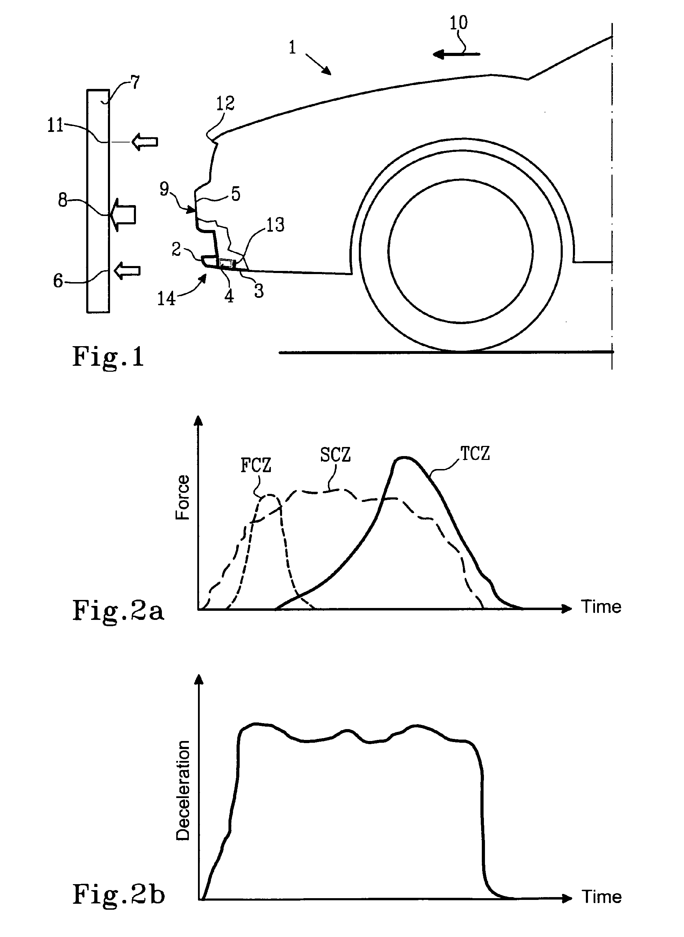

Fig. 1 illustrates a vehicle 1 provided with a first bumper device 2 having a housing 3 and an elongated free body 4 according to the invention and a second bumper device 5 according to prior art. The first bumper 2 device arranged in the front of the vehicle 1 provides a first contact zone 6 between the bumper device and a foreign body 7 in case of an impact between such a foreign body and the vehicle 1. The second bumper 5 device is arranged in the front part of the vehicle substantially in parallel with the first bumper 2 device at a higher level than the first bumper device for providing a second contact zone 8 between the bumper device and a foreign body during impact.

The expression "foreign body" encompasses any object remote from the vehicle with which the vehicle may impact. Thus, the foreign body may be constituted by another vehicle, a pedestrian, a building, a lamppost or signpost, an animal, a tree or any other movable or immovable object.

The first bumper device 2 thus arranged at a lower level than the second bumper device 5 is preferably arranged behind the front surface 9 of the second bumper device 5 with respect to the forward direction 10 of the vehicle 1. This means that in case of an impact initially the second contact zone 8 between the second bumper 5 device and the foreign body 7 is established. During impact the second bumper device 5 deforms in a controlled manner to thereby absorb energy which arises during impact between the vehicle 1 and the foreign object 7. Then, after a short period of time, preferably within 20-60 milliseconds, the first contact zone 6 between the first bumper device 2 and the foreign object 7 is established. To obtain the desired delay between the establishment of the first and second contact zones the first bumper device 2 is arranged behind the second bumper device with a certain distance, for example in the interval 0-150 mm, and preferably in the interval 5-100 mm. Certainly, this distance should be adapted to the deformation performance of the second bumper device 5. In experiments a distance of 10 mm has been tested and found to work very well in many cases.

Furthermore, if for example a different impact characteristic of the front part of the vehicle is desired, in another embodiment the second bumper device could be arranged behind the front surface of the first bumper device with respect to the forward direction of the vehicle, for example in the interval 0-30 mm.

Preferably, the first bumper device 2 is designed as a spoiler arranged in the front part of the vehicle 1. The first bumper device can be separated from the second bumper device, or the housing of the first bumper device according to the invention can be coupled to or integral with such a conventional second bumper device.

Fig. 2a illustrates a force versus time-chart during impact between a vehicle 1 and a simulated leg 7 of a pedestrian. See also Fig. 1. The first graph denoted SCZ shows the force arising in the second contact zone 8 between the second bumper device 5 and the simulated leg 7, the second graph denoted FCZ shows the force arising in the first contact zone 6 between the first bumper device 2 arranged as a spoiler and the simulated leg 7, and the third graph denoted TCZ shows the force arising in a third contact zone 11 between for example the bonnet leading edge 12 of the vehicle 1 and the simulated leg 7.

Fig. 2b illustrates a deceleration versus time-chart during impact between a vehicle 1 and a simulated leg 7 of a pedestrian. A summation of the graphs in Fig. 2a results in the square pulse illustrated in the deceleration versus time-chart in Fig. 2b, and the area of the square pulse corresponds to the energy transferred to the simulated leg 7 during impact. As appears from Fig. 2a the force built up in the first contact zone 6 by means of the bumper device 2 according to the invention is preferably located in the beginning of the impact course, and the force pulse reach the top value rapidly and then the force pulse decreases rapidly to zero again.

The free body may be designed in the form of one continuous beam 4, or two or several beam portions, preferably extending in the longitudinal direction along a major part of or the entire length of the bumper device 2, which in turn suitably extends along substantially the entire width of the front of a vehicle 1. Such an elongated beam 4 is preferably arranged in a compartment 13 of the housing 3. The beam may be a hollow beam 4 or a solid spar having a rectangular, a circular or other cross section, and may be made from different materials, such as steel alloys, aluminium alloys, compressed foam materials etc. The mass of the beam 4 has to be adapted to the desired performance and the present conditions in the certain case, but in applications where the vehicle is a private car the mass could often be in the interval from a few hundred grams to several thousand grams, preferably in the interval 500-2000 g.

As an example only, the beam 4 is a hollow elongated beam having a rectangular cross section and is made from aluminium and is accommodated in a compartment 13 having substantially the same shape and cross section dimensions as the beam. The compartment 13 is preferably located in the lower part 14 of the housing 3 which housing is made from plastic. The weight of the beam is approximately 1000 g.

The bumper device 2 according to the invention comprising the free body 4 has two major characteristics which may be used separately or in combination with each other. The designs and masses of the free body 4 and the housing 3 determine to which extent the both aspects occur. In accordance with both aspects the free body 4 is arranged to build up a major part of or substantially the entire force arising in the contact zone 6 during impact by means of the mass-moment of inertia of the bumper device 2. A major part is intended to be in the interval from at least 20% and up to 100 %. Preferably, about 40-100%, or more preferably 60-100% of the force in the contact zone 6 is built up by means of the mass-moment of inertia of the bumper device 2.

In accordance with the first aspect this can be achieved by giving the free body 4 a mass adapted to the mass of the entire bumper device 2 and/or adapted to the strength of the housing 3 so that a major part of or substantially the entire force arising in the contact zone 6 during impact is built up by means of the mass-moment of inertia of the mass of said free body 4.

However, according to the second aspect of the invention the free body 4 may be arranged to build up a major part of or substantially the entire force arising in the contact zone 6 during impact by means of the mass-moment of inertia of the bumper device 2 by utilising also the mass of the housing 3. This can be achieved by arranging said free body 4 and the housing 3 relative to each other in a way so that the kinetic energy of the free body 4 transferred to the housing 3 during impact is distributed over a part of the housing 3 corresponding to a large fraction or a major part of the mass of the housing 3. A large fraction or major part of the mass of the housing 3 is intended to be in the interval from at least 20% and up to 100%. Preferably, the said fraction or major part constitutes about 30-80%, or more preferably 40-70% of the mass of the housing 3, and thus contributes to the force built up by the mass-moment of inertia of the bumper device 2.

Usually, in case of an impact between a foreign body and a conventional spoiler according to prior art only a relatively small part of the spoiler corresponding to a small fraction of the mass of the spoiler is involved in the crash. Due to the low strength of the spoiler an extensive deformation of the spoiler could occur, but there is not any force, or only a negligible force built up in the contact zone by the moment of inertia of the mass of the spoiler.

By using a free body in the shape of a beam 4 for instance and a housing 3 instead of a conventional spoiler, the beam 4 can be arranged to take a part of the housing 3 corresponding to a considerable part of the mass of the housing 3, such as described above, along with the beam 4 when the beam moves backwards during impact and thus, the mass-moment of inertia of the housing 3 will also contribute to the force built up in the contact zone 6.

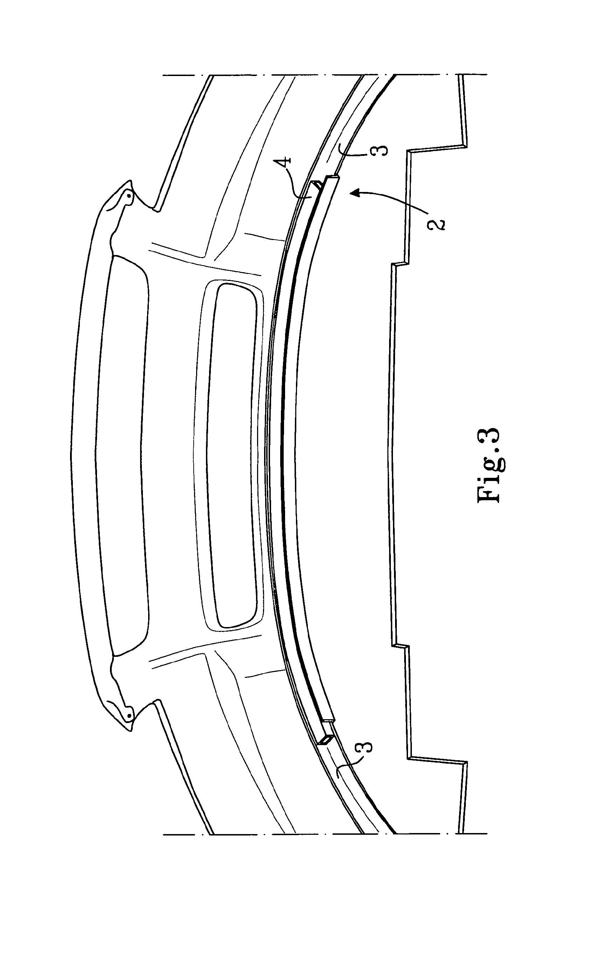

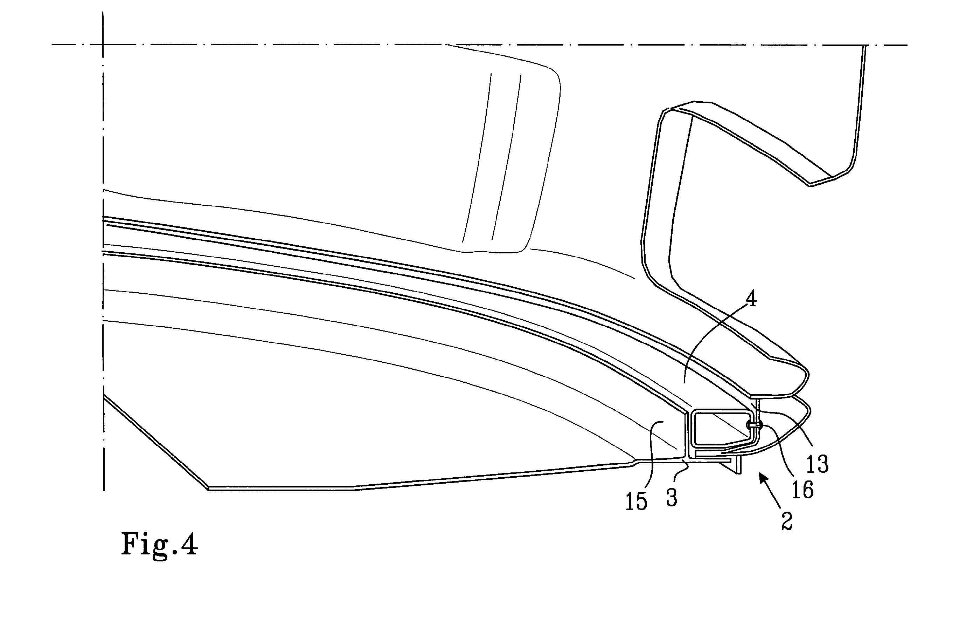

Fig. 3 illustrates in perspective from the inside of the bumper device 2 the bumper beam 4 arranged in the compartment 13 of the housing 3, and Fig. 4 is a cross section view of the bumper device 2 in Fig. 3. The bumper beam 4 is arranged inside the compartment 13, the walls 15 of which determine the position of the beam 4 relative the housing 3. However, the beam 4 may also be attached to the housing 3 by means of bolts, rivets 16, welds or glue or similar so as to held the beam 4 in the desired position under normal conditions, i.e. under non-impact situations.

It is to be understood that the present invention is not limited to the embodiments described above and illustrated in the drawings; rather, the skilled person will recognize that many changes and modifications may be made within the scope of the appended claims as soon as the insight to use a free body for a bumper device has been disclosed. For example the dimensions and the material of the components comprised in the device according to the invention may be varied in many ways.

## Claims

1. A bumper device (2) for use with a vehicle (1), for providing a contact zone (6) between the bumper device (2) and a foreign body (7) during impact between a vehicle (1) and such a foreign body (7), said bumper device (2) comprising a housing (3), **characterized in that** said housing (3) accommodates an elongated free body (4) arranged to build up a major part of the force arising in the contact zone (6) during impact by means of the mass-moment of inertia of the bumper device (2).

2. A bumper device according to claim 1, **characterized in that** said free body (4) is arranged to build up substantially the entire force arising in the contact zone (6) during impact by means of the mass-moment of inertia of the bumper device (2).

3. A bumper device according to claim 1 or 2, **characterized in that** said free body (4) is adapted to the entire bumper device (2) so that a major part of the force arising in the contact zone (6) during impact is built up by means of the mass-moment of inertia of the mass of said free body (4).

4. A bumper device according to claim 3, **characterized in that** said free body (4) is arranged to build up substantially the entire force arising in the contact zone (6) during impact by means of the mass-moment of inertia of the free body (4).

5. A bumper device according to any preceding claim, **characterized in that** said free body (4) and the housing (3) are arranged relative to each other in a way so that the kinetic energy of the free body (4) transferred to the housing (3) during impact is distributed over a part of the housing (3) corresponding to a large fraction or a major part of the mass of the housing (3).

6. A bumper device according to claim 1, **characterized in that** the housing (3) is arranged to build up a major part of the force arising in the contact zone (6) during impact by means of the mass-moment of inertia of the housing (4).

7. A bumper device according to any of claims 1 to 6, **characterized in that** the bumper device (2) is adapted for use as a spoiler to be mounted in the front part of a vehicle (1).

8. A bumper device according to any preceding claim, **characterized in that** the elongated free body is a beam (4) extending in the longitudinal direction along a major part of or substantially the entire length of the bumper device (2).

9. A vehicle comprising a first bumper device (2) arranged in the front part of the vehicle (1) for providing a first contact zone (6) between the bumper device (2) and a foreign body (7) during impact between the vehicle (1) and such a foreign body (7), said first bumper device (2) comprising a housing (3), **characterized in that** said housing (3) accommodates an elongated free body (4) arranged to build up a major part of the force arising in the first contact zone (6) during impact by means of the mass-moment of inertia of the first bumper device (2).

10. A vehicle according to claim 9, **characterized in that** said free body (4) is arranged to build up substantially the entire force arising in the first contact zone (6) during impact by means of the mass-moment of inertia of the first bumper device (2).

11. A vehicle according to claim 10, **characterized in that** said free body (4) is adapted to the entire first bumper device (2) so that a major part of the force arising in the first contact zone (6) during impact is built up by means of the mass-moment of inertia of the mass of said free body (4).

12. A vehicle according to claim 11, **characterized in that** said free body (4) is arranged to build up substantially the entire force arising in the first contact zone (6) during impact by means of the mass-moment of inertia of the free body (4).

13. A vehicle according to any of claims 9-12, **characterized in that** said free body (4) and the housing (3) are arranged relative to each other in a way so that the kinetic energy of the free body (4) transferred to the housing (3) during impact is distributed over a part of the housing (3) corresponding to a large fraction or a major part of the mass of the housing (3).

14. A vehicle according to claim 9, **characterized in that** the housing (3) is arranged to build up a major part of the force arising in the first contact zone (6) during impact by means of the mass-moment of inertia of the housing (3).

15. A vehicle according to any of claims 9-14, **characterized in that** the first bumper device (2) constitutes a leg protection in a collision between the vehicle (1) and a pedestrian.

16. A vehicle according to any of claims 9-15, **characterized in that** the vehicle (1) comprises a second bumper device (5) arranged in the front part of the vehicle (1) at a level different from the first bumper device (2), for providing a second contact zone (8) between the bumper device (5) and a foreign body (7) during impact between the vehicle (1) and such a foreign body (7).

17. A vehicle according to claim 16, **characterized in that** the first bumper device (2) is arranged at a lower level than the second bumper device (5).

18. A vehicle according to claim 16 or 17, **characterized in that** the first bumper device (2) is arranged behind the front surface (9) of the second bumper device (5) with respect to the forward direction (10) of the vehicle (1).

19. A vehicle according to any of claims 9-18, **characterized in that** the first bumper device (2) is designed as a spoiler arranged in the front part of the vehicle (1).

20. A vehicle according to any of claims 9-19, **characterized in that** the elongated free body is a beam (4) extending in the longitudinal direction along a major part of or substantially the entire length of the bumper device (2).

21. A bumper assembly comprising a first bumper device (2) and a second bumper device (5), for use with a vehicle (1), for providing a first contact zone (6) between the first bumper device (2) and a foreign body (7) during impact between a vehicle (1) and such a foreign body (7), and a second contact zone (8) between the second bumper device (5) and said foreign body (7) during impact, said first and second bumper devices being arranged at different heights relative to each other, at least one of said bumper devices (2) comprising a housing (3), **characterized in that** said housing (3) accommodates an elongated free body (4) arranged to build up a major part of the force arising in the contact zone (6) during impact by means of the mass-moment of inertia of the bumper device (2).

22. A bumper assembly according to claim 21, **characterized in that** the first bumper device (2) comprises said housing (3) accommodating said free body (4).

23. A bumper assembly according to claim 21 or 22, **characterized in that** the first bumper device (2) is arranged at a lower level than the second bumper device (5).

24. A bumper assembly according to any of claims 21-23, **characterized in that** the first bumper device (2) is arranged behind the front surface (9) of the second bumper device (5) with respect to the intended forward direction (10) of the vehicle (1).

25. A bumper assembly according to any of claims 21-24, **characterized in that** the first (2) and second (5) bumper device are attached to each other by means of the housing (3).

26. A bumper assembly according to any of claims 21-25, **characterized in that** the first (2) and second (5) bumper device are made integral with each other by means of the housing (3).

27. A bumper assembly according to any of claims 21-26, **characterized in that** the first bumper device (2) is adapted to be located as a spoiler in the front part of a vehicle (1).

28. A bumper assembly according to any of claims 21-27, **characterized in that** the elongated free body is a beam (4) extending in the longitudinal direction along a major part of or substantially the entire length of the first bumper device (2).

29. Use of a free body (4) for building up a major part of the force arising in the contact zone (6) during impact between a bumper device (2) of a vehicle (1) and a foreign body (7) by means of the mass-moment of inertia of the bumper device (2).

30. Use of a free body (4) for building up a major part of the force arising in the contact zone (6) during impact between a bumper device (2) of a vehicle (1) and a foreign body (7) by means of the mass-moment of inertia of the free body (4).
